# EUROPEAN PATENT APPLICATION

(11) **EP 4 641 890 A1**
(43) Date of publication of application: **29.10.2025**
(21) Application number: 23909404.8
(22) Date of filing: 26.09.2023
(51) Int. Cl.: H02K 7/00

(54) **BIDIRECTIONAL FORCE-BEARING MOTOR AND AIRCRAFT COMPRISING SAME**

(30) Priority: 25.12.2022 CN 202223463638 U; 28.07.2023 CN 202310937642
(71) Applicant: Autoflight (Kunshan) Co., Ltd., Suzhou, Jiangsu 215345 (CN)
(72) Inventor: TIAN, Yu, Suzhou, Jiangsu 215345 (CN); XI, Jinping, Suzhou, Jiangsu 215345 (CN)
(74) Representative: MERH-IP Matias Erny Reichl Hoffmann Patentanwälte PartG mbB
(86) International application number: PCT/CN2023/121420
(87) International publication number: WO 2024/139469

(57) **Abstract**

The present invention belongs to the technical field of aircraft and discloses a bidirectional load-bearing motor and an aircraft comprising the same. The motor includes a bearing housing, a rotating shaft, a locking screw, a bearing, and a bearing retainer. The rotating shaft comprises a first shaft and a second shaft concentrically arranged with a shaft shoulder formed at their junction. The locking screw is threadedly connected to the inner surface of the second shaft. The bearing is sandwiched between the bearing housing and the rotating shaft; the inner ring of the bearing is sleeved on the second shaft, and the end face of the bearing away from the locking screw abuts against the shaft shoulder, while the outer ring of the bearing contacts the bearing housing. The bearing retainer is sandwiched between the locking screw and the bearing; the end face of the bearing retainer away from the locking screw abuts against the end face of the bearing proximate to the locking screw, thereby restricting displacement of the bearing in the axial direction of rotation. When the rotating shaft is subjected to thrust or tensile forces, a single bearing can withstand both thrust and tensile forces.

## Description

### FIELD OF THE DISCLOSURE

The present invention relates to the field of aircraft, and specifically, to a bidirectional load-bearing motor and an aircraft comprising the same.

### BACKGROUND OF THE INVENTION

In the prior art, most thrust devices cannot simultaneously achieve both thrust and tensile force functions. To enhance the versatility of power devices used on aircraft and unify the structures of lift devices and thrust devices for vertical take-off and landing aircraft, there is a need to develop a thrust device capable of generating both thrust and tensile force. This would significantly improve component versatility and substantially reduce production costs and complexity. The objective of this solution focuses on reducing weight, minimizing installation structures, improving reliability, and lowering costs.

### SUMMARY OF THE INVENTION

The purpose of the present invention is to provide a bidirectional load-bearing motor and an aircraft comprising the same, featuring a simple structure capable of simultaneously withstanding tensile and thrust forces.

To achieve this purpose, the present invention adopts the following technical solution:
The present invention provides a bidirectional load-bearing motor, comprising:
a bearing housing;
a rotating shaft, comprising a first shaft and a second shaft concentrically arranged with a shaft shoulder formed at their junction;
a locking screw, threadedly connectable to an inner surface of the second shaft;
a bearing, sandwiched between the bearing housing and the rotating shaft, wherein an inner ring of the bearing is sleeved on the second shaft, an end face of the bearing away from the locking screw abuts against the shaft shoulder, and an outer ring of the bearing contacts the bearing housing;
a bearing retainer, sandwiched between the locking screw and the bearing, wherein an end face of the bearing retainer away from the locking screw abuts against the end face of the bearing proximate to the locking screw, configured to restrict a displacement of the bearing in an axial direction of the rotating shaft.

Preferably, it includes a thrust transmission path: when the first shaft is subjected to a thrust force along the axial direction of the rotating shaft, the first shaft transmits the thrust force to the bearing via the end face of the bearing abutting against the shaft shoulder and away from the locking screw, and the bearing transmits the thrust force to the bearing housing through its outer ring.

Preferably, it includes a tensile force transmission path: when the first shaft is subjected to a tensile force along the axial direction of the rotating shaft, the first shaft transmits the tensile force to the locking screw via the second shaft, the locking screw transmits the tensile force to the bearing via the bearing retainer, and the bearing transmits the tensile force to the bearing housing through its outer ring.

Preferably, an outer circumferential diameter of the first shaft is slightly larger than an outer circumferential diameter of the second shaft to form the shaft shoulder.

Preferably, the first shaft is detachably connectable to a propeller.

Preferably, the rotating shaft has a hollow structure.

Preferably, the bearing is a deep groove ball bearing.

Preferably, the locking screw has a convex-shaped cross-section.

Preferably, the locking screw has two threaded holes on a face proximate to the bearing; two screws are threadedly connectable to the locking screw through the threaded holes to provide a secondary reinforcement for the locking screw.

To achieve this purpose, the present invention also adopts the following technical solution:
The present invention provides an aircraft, comprising a motor and a propeller, wherein the motor is the bidirectional load-bearing motor as described in the above solution.

The beneficial effects of the present invention are as follows: In the present invention, the rotating shaft passes through the inner bore of the bearing and is secured by the locking screw. When the rotating shaft is subjected to thrust, the rotating shaft transmits the force to the bearing via the position of the shaft shoulder, and the bearing then transmits the thrust to the bearing housing via its outer ring. When the rotating shaft is subjected to tensile force, the rotating shaft transmits the force to the locking screw, which then transmits the force to the bearing via the bearing retainer. Subsequently, the bearing transmits the force to the bearing housing via its outer ring. This enables a single bearing to withstand both thrust and tensile forces, thereby achieving structural commonality for aircraft lift and thrust systems.

### BRIEF DESCRIPTION OF DRAWINGS

FIG. 1 is an overall schematic diagram of the bidirectional load-bearing motor of the present invention;

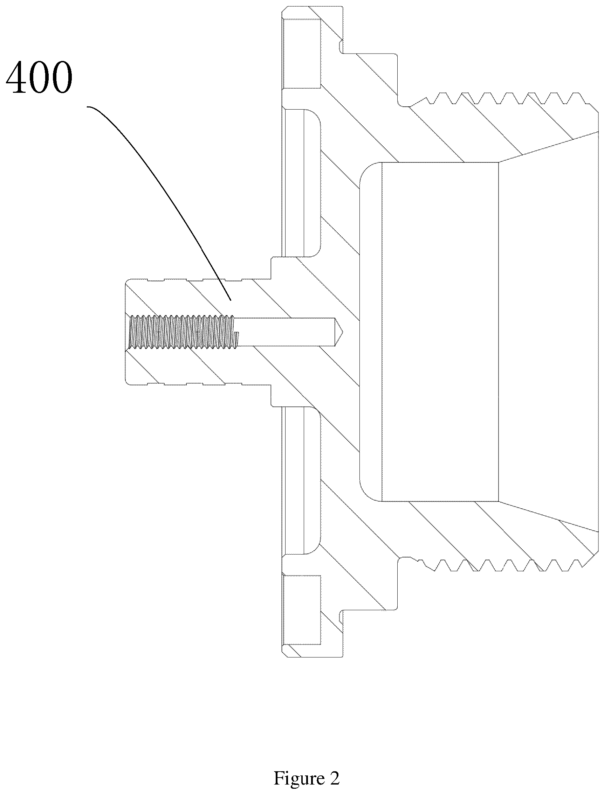

FIG. 2 is an overall schematic diagram of the locking screw of the present invention;

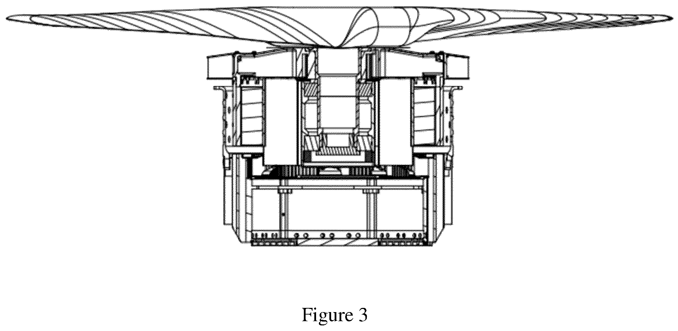

FIG. 3 is an overall schematic diagram of the bidirectional load-bearing motor and propeller of the present invention.

### DETAILED DESCRIPTION

To make the objectives, technical solutions, and advantages of the present invention clearer, the embodiments of the present invention will be described in detail below with reference to the accompanying drawings. However, those of ordinary skill in the art can understand that in the various embodiments of the present invention, many technical details are proposed in order to enable the reader to better understand the present invention. Nevertheless, the technical solutions claimed in the claims of the present invention can be implemented even without these technical details and various changes and modifications based on the following embodiments.

Unless the context otherwise requires, throughout the specification and claims, the words "comprise" and variations thereof, such as "include" and "have", should be understood in an open, inclusive sense, that is, interpreted as "including, but not limited to".

The embodiments of the present invention will be described in detail below with reference to the accompanying drawings to more clearly understand the purpose, features, and advantages of the present invention. It should be understood that the embodiments shown in the drawings are not limitations on the scope of the present invention but are merely intended to illustrate the substantive content of the technical solutions of the present invention.

References throughout the specification to "one embodiment" or "an embodiment" mean that a particular feature, structure, or characteristic described in connection with the embodiment is included in at least one embodiment. Therefore, the appearances of the phrases "in one embodiment" or "in an embodiment" in various places throughout the specification do not necessarily all refer to the same embodiment. Furthermore, the particular features, structures, or characteristics may be combined in any suitable manner in one or more embodiments.

The singular forms "a", "an", and "the" as used in the specification and appended claims include plural references unless the context clearly dictates otherwise. It should be noted that the term "or" is generally used in its inclusive sense meaning "and/or" unless the context clearly dictates otherwise.

In the following description, numerous directional terms will be used to clearly illustrate the structure and working mode of the present invention. However, terms such as "front", "rear", "left", "right", "outer", "inner", "outward", "inward", "upper", "lower", etc., should be understood as convenient terms for description and should not be construed as limiting terms.

The first embodiment of the present invention provides a bidirectional load-bearing motor.

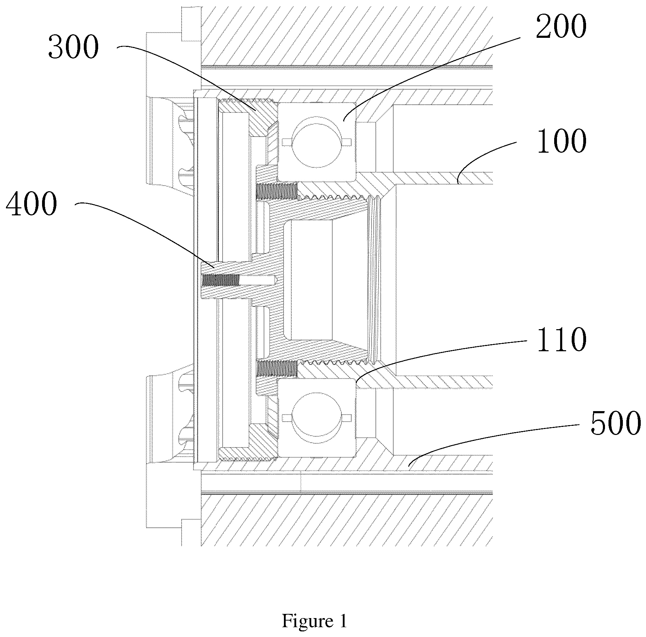

As shown in FIG. 1, the bidirectional load-bearing motor of this embodiment includes a bearing housing 500, a rotating shaft 100, a locking screw 400, a bearing 200, and a bearing retainer 300. The rotating shaft 100 comprises a first shaft and a second shaft concentrically arranged with a shaft shoulder 110 formed at their junction. The locking screw 400 is threadedly connected to the inner surface of the second shaft. The bearing 200 is sandwiched between the bearing housing 500 and the rotating shaft 100. The inner ring of the bearing 200 is sleeved on the second shaft, the end face of the bearing 200 away from the locking screw 400 abuts against the shaft shoulder 110, and the outer ring of the bearing 200 contacts the bearing housing 500. The bearing retainer 300 is sandwiched between the locking screw 400 and the bearing 200. The end face of the bearing retainer 300 away from the locking screw 400 abuts against the end face of the bearing 200 proximate to the locking screw 400, thereby restricting displacement of the bearing 200 in the axial direction of the rotating shaft.

Furthermore, the bidirectional load-bearing motor of this embodiment includes a thrust transmission path: when the first shaft is subjected to a thrust force along the axial direction of the rotating shaft, the first shaft transmits the thrust force to the bearing 200 via the end face of the bearing 200 abutting against the shaft shoulder 110 and away from the locking screw 400, and the bearing 200 transmits the thrust force to the bearing housing 500 through its outer ring.

Furthermore, the bidirectional load-bearing motor of this embodiment includes a tensile force transmission path: when the first shaft is subjected to a tensile force along the axial direction of the rotating shaft, the first shaft transmits the tensile force to the locking screw 400 via the second shaft, the locking screw 400 transmits the tensile force to the bearing 200 via the bearing retainer 300, and the bearing 200 transmits the tensile force to the bearing housing 500 through its outer ring.

Notably, the outer circumferential diameter of the first shaft is slightly larger than the outer circumferential diameter of the second shaft to form the shaft shoulder 110.

Furthermore, the first shaft is detachably connected to a propeller.

Furthermore, the rotating shaft 100 has a hollow structure, allowing the inner end of the rotating shaft 100 to be threaded, enabling the locking screw 400 to be threadedly connected to the rotating shaft 100.

Furthermore, the bearing 200 is a deep groove ball bearing.

Furthermore, the locking screw 400 has a convex-shaped cross-section.

Additionally, in the bidirectional load-bearing motor of this embodiment, the locking screw 400 has two threaded holes on the face proximate to the bearing 200; two screws are threadedly connected to the locking screw 400 through the threaded holes to provide secondary reinforcement for the locking screw 400.

During use, the bearing 200 is first assembled, and then the bearing retainer 300 is locked, thereby achieving upper and lower axial limitation of the bearing 200. Subsequently, the rotating shaft 100 is passed through the inner bore of the bearing and secured with the locking screw 400.

When the rotating shaft 100 is subjected to thrust, the rotating shaft 100 transmits the force to the bearing 200 via the position of the shaft shoulder 110, and the bearing 200 then transmits the thrust to the bearing housing 500 via its outer ring.

When the rotating shaft 100 is subjected to tensile force, the rotating shaft 100 transmits the force to the locking screw 400, which then transmits the force to the bearing 200 via the bearing retainer 300. Subsequently, the bearing 200 transmits the force to the bearing housing 500 via its outer ring. This enables a single bearing 200 to withstand both thrust and tensile forces.

The second embodiment of the present invention provides an aircraft. The aircraft includes a motor and a propeller, wherein the motor is the bidirectional load-bearing motor as described in the above solution. An aircraft equipped with this motor can achieve structural commonality for lift and thrust systems.

The above embodiments are only exemplary illustrations of the principles and effects of the present invention and are not intended to limit the present invention. Anyone familiar with this technology can modify or change the above embodiments without departing from the invention purpose of the present invention. Therefore, all equivalent modifications or changes completed by those with ordinary knowledge in the technical field without departing from the purpose disclosed in the present invention shall still be covered by the claims of the present invention.

## Claims

1. A bidirectional load-bearing motor, comprising:
a bearing housing;
a rotating shaft, comprising a first shaft and a second shaft, wherein the first shaft and the second shaft are concentrically arranged with a shaft shoulder formed at their junction;
a locking screw, threadedly connectable to an inner surface of the second shaft;
a bearing, sandwiched between the bearing housing and the rotating shaft, wherein an inner ring of the bearing is sleeved on the second shaft, an end face of the bearing away from the locking screw abuts against the shaft shoulder, and an outer ring of the bearing contacts the bearing housing;
a bearing retainer, sandwiched between the locking screw and the bearing, wherein an end face of the bearing retainer away from the locking screw abuts against the end face of the bearing proximate to the locking screw, configured to restrict a displacement of the bearing in an axial direction of the rotating shaft.

2. The bidirectional load-bearing motor according to claim 1, **characterized by** comprising a thrust transmission path: when the first shaft is subjected to a thrust force along the axial direction of the rotating shaft, the first shaft transmits the thrust force to the bearing via the end face of the bearing abutting against the shaft shoulder and away from the locking screw, and the bearing transmits the thrust force to the bearing housing through its outer ring.

3. The bidirectional load-bearing motor according to claim 2, **characterized by** comprising a tensile force transmission path: when the first shaft is subjected to a tensile force along the axial direction of the rotating shaft, the first shaft transmits the tensile force to the locking screw via the second shaft, the locking screw transmits the tensile force to the bearing via the bearing retainer, and the bearing transmits the tensile force to the bearing housing through its outer ring.

4. The bidirectional load-bearing motor according to claim 1, **characterized in that** an outer circumferential diameter of the first shaft is slightly larger than an outer circumferential diameter of the second shaft to form the shaft shoulder.

5. The bidirectional load-bearing motor according to claim 1, **characterized in that** the first shaft is detachably connectable to a propeller.

6. The bidirectional load-bearing motor according to claim 1, **characterized in that** the rotating shaft has a hollow structure.

7. The bidirectional load-bearing motor according to claim 1, **characterized in that** the bearing is a deep groove ball bearing.

8. The bidirectional load-bearing motor according to claim 1, **characterized in that** the locking screw has a convex-shaped cross-section.

9. The bidirectional load-bearing motor according to claim 8, **characterized in that** the locking screw has two threaded holes on a face proximate to the bearing; two screws are threadedly connectable to the locking screw through the threaded holes to provide a secondary reinforcement for the locking screw.

10. An aircraft, comprising a motor and a propeller, wherein the motor is the bidirectional load-bearing motor according to any one of claims 1 to 9.
